# EUROPEAN PATENT SPECIFICATION

(11) **EP 4 570 393 B1**
(45) Date of publication and mention of the grant of the patent: **29.04.2026**
(21) Application number: 23893955.7
(22) Date of filing: 18.12.2023
(51) Int. Cl.: G05B 19/402, B08B 7/00, H01M 10/04, G05B 19/18, B08B 13/00

(54) **CLEANING METHOD AND SYSTEM**
REINIGUNGSVERFAHREN UND -SYSTEM
PROCÉDÉ ET SYSTÈME DE NETTOYAGE

(30) Priority: 12.10.2023 CN 202311321041
(43) Date of publication of application: 18.06.2025
(73) Proprietor: Contemporary Amperex Technology (Hong Kong) Limited, Central, Central And Western District (HK)
(72) Inventor: HUANG, Hua, Ningde, Fujian 352100 (CN); XIE, Yuming, Ningde, Fujian 352100 (CN); GONG, Xueqing, Ningde, Fujian 352100 (CN); CHEN, Fanke, Ningde, Fujian 352100 (CN); CHEN, Haoyuan, Ningde, Fujian 352100 (CN)
(74) Representative: Gong, Jinping
(86) International application number: PCT/CN2023/139466
(87) International publication number: WO 2025/076995

(56) References cited:
- CN-A- 106 684 429
- CN-A- 109 950 606
- CN-A- 114 347 086
- CN-A- 115 026 469
- CN-A- 116 387 728
- CN-A- 116 435 572
- CN-A- 117 046 828
- CN-U- 206 432 330
- CN-U- 208 070 725
- CN-U- 218 223 870
- CN-U- 218 706 940
- KR-A- 20140 037 402

## Description

### Cross-Reference to Related Application

The present disclosure is proposed on the basis of and claims the priority to the Chinese Patent Application No. 202311321041.6, filed on October 12, 2023 and entitled "CLEANING METHOD AND SYSTEM.

### Technical Field

The present disclosure relates to the technical field of batteries, and in particular, to a cleaning method and system.

### Background Art

New energy batteries are increasingly widely used in life and industry. For example, new energy vehicles equipped with batteries have been widely used. In addition, batteries are also increasingly used in the energy storage field and the like.

Currently, for a production line of assembled batteries, before mounting of battery modules into a case, it is necessary to first suspend the production line and use a cleaning apparatus to clean the first battery module and verify the cleaning effect. That is to say, the current cleaning method needs to be performed in the production line, which is inconvenient to operate and affects normal production of the production line of assembled batteries.
CN218223870U describes a battery cell plasma first piece cleaning device.

### Summary of the Invention

Embodiments of the present disclosure provide a cleaning method as defined in claims 1 to 6, a cleaning system as defined in claims 7 to 14, and a battery production line as defined in claim 15, which can effectively improve operation convenience without affecting normal production and improve production efficiency.

Technical solutions of the embodiments of the present disclosure are implemented as follows.

In a first aspect, an embodiment of the present disclosure provides a cleaning method applied to a cleaning system. The cleaning system includes a control device, a quick swap platform and a clamping jaw device. The method includes:
determining, by the control device, whether there is a target tool on the quick swap platform according to target first-article information when receiving the target first-article information, where the target first-article information represents blueprint information of a first-article battery module; and the target tool is a tool configured to be cleaned instead of the first-article battery module; and
controlling, by the control device, the clamping jaw device to grab the target tool for cleaning when it is determined that there is the target tool on the quick swap platform.

In this embodiment, the cleaning system includes the control device, the quick swap platform and the clamping jaw device. When the cleaning system cleans battery modules, the control device in the cleaning system may determine, according to the blueprint information of the first-article battery module that needs to be cleaned, whether there is a tool configured to be cleaned instead of the first-article battery module, that is, the target tool, on the quick swap platform so as to control the clamping jaw device to grab the target tool for cleaning when it is determined that there is the target tool on the quick swap platform. Outside a production line corresponding to the battery modules, the quick swap platform and the clamping jaw device can be used to complete the cleaning of the first-article battery module, thus effectively improving the operation convenience of cleaning the first-article battery module and thereby improving the production efficiency.

In some embodiments of the present disclosure, the cleaning system includes a plasma cleaning machine, and the clamping jaw device includes a side clamp; and controlling the clamping jaw device to grab the target tool for cleaning includes:
controlling the clamping jaw device to move to a grabbing position corresponding to the target tool;
controlling the side clamp to grab the target tool based on the grabbing position, and controlling the clamping jaw device to move to a cleaning position when the side clamp grabs the target tool; and
controlling the plasma cleaning machine to clean the target tool.

In this embodiment, the control device can first control the clamping jaw device to move to the grabbing position at which the target tool can be grabbed, then control the side clamp to grab the target tool at the grabbing position, and then move the clamping jaw device having grabbed the target tool to the plasma cleaning machine at which plasma cleaning can be performed, so that the plasma cleaning machine starts to be controlled to clean the target tool, thus completing the cleaning of the target tool, which is equivalent to completing the cleaning of the first-article battery module, thereby cleaning the first-article battery module by using the quick swap platform and the clamping jaw device, and effectively improving the operation convenience of cleaning the first-article battery module.

In some embodiments of the present disclosure, the target tool includes a cleaning plate, and controlling the plasma cleaning machine to clean the target tool includes:
controlling the plasma cleaning machine to clean the cleaning plate.

In this embodiment, when the control device controls the plasma cleaning machine to clean the target tool, the plasma cleaning machine is mainly controlled to clean the cleaning plate in the target tool, which can improve the operation convenience of cleaning the first-article battery module.

In some embodiments of the present disclosure, the quick swap platform includes a laser through-beam sensor and a reader-writer; and determining whether there is the target tool on the quick swap platform according to blueprint type information of the battery module includes:
detecting, by the control device, whether there is a tool on the quick swap platform based on the laser through-beam sensor;
reading a radio frequency identification chip corresponding to the tool by means of the reader-writer when it is determined that there is the tool on the quick swap platform, so as to obtain identity information of the tool; and
determining whether the tool is the target tool according to the identity information of the tool and the target first-article information.

In this embodiment, since the laser through-beam sensor is provided on the quick swap platform, the control device can determine whether there is a tool on the quick swap platform based on the detection by means of the laser through-beam sensor, and when it is determined that there is the tool on the quick swap platform, the radio frequency identification chip corresponding to the tool is read by means of the reader-writer on the quick swap platform, so as to determine whether the tool on the quick swap platform in this case is the target tool configured to be cleaned instead of the first-article battery module, thereby accurately detecting whether there is a tool on the quick swap platform and whether the tool is a tool matching the first-article battery module, and improving automation and intelligence of the cleaning system.

In some embodiments of the present disclosure, the quick swap platform includes a placement section, and after controlling, by the control device, the clamping jaw device to grab the target tool for cleaning when it is determined that there is the target tool on the quick swap platform, the method further includes:
controlling, by the control device, the clamping jaw device to place the target tool at the placement section.

In this embodiment, each time the control device controls the clamping jaw device to grab the target tool to complete cleaning, the control device may further control the clamping jaw device to place the target tool at the placement section, thereby improving the automation and intelligence of the cleaning system.

In some embodiments of the present disclosure, the quick swap platform includes a working section, and after controlling, by the control device, the clamping jaw device to place the target tool at the placement section, the method further includes:
controlling, by the control device, the quick swap platform to pull the target tool at the placement section to the working section.

In this embodiment, the quick swap platform further includes the working section in addition to the placement section, so that the control device can also control the quick swap platform to pull the target tool placed at the placement section to the working section, so as to facilitate grabbing for the next time and cleaning, thereby improving the automation and intelligence of the cleaning system.

In some embodiments of the present disclosure, the method further includes:
controlling, by the control device, the quick swap platform to move out when receiving a moving-out operation instruction of the quick swap platform; or
controlling, by the control device, the quick swap platform to move back when receiving a moving-back operation instruction of the quick swap platform.

In this embodiment, when the control device receives the moving-out operation instruction of the quick swap platform, the quick swap platform can be controlled to move out, or when the control device receives the moving-back operation instruction of the quick swap platform, the quick swap platform can be controlled to move back, thus completing the moving-out or moving-back operation of the quick swap platform and improving the automation and intelligence of the cleaning system.

In a second aspect, an embodiment of the present disclosure provides a cleaning system. The cleaning system includes a quick swap platform, a clamping jaw device, a plasma cleaning machine and a control device, where
the quick swap platform and the clamping jaw device are connected to the control device;
the control device is configured to control, when it is determined that there is a target tool on the quick swap platform based on target first-article information, the clamping jaw device to grab and move the target tool to the plasma cleaning machine for cleaning; and
the quick swap platform is configured to place the target tool.

In this embodiment, the target tool may be placed on the quick swap platform. When the control device receives the target first-article information and determines that there is the target tool on the quick swap platform according to the target first-article information, the clamping jaw device can be controlled to grab the target tool and move the target tool to the plasma cleaning machine for cleaning, so that the cleaning operation can be completed based on the quick swap platform and the target tool without cleaning the first-article battery module in a battery production line, thereby effectively improving the operation convenience of cleaning the first-article battery module and further improving the production efficiency.

### Brief Description of the Drawings

Various other advantages and benefits will become obvious to those of ordinary skill in the art upon reading the following detailed description of embodiments. The accompanying drawings are merely for the purpose of illustrating the preferred embodiments, and should not be construed as limiting the present disclosure. Moreover, the same reference signs represent the same components throughout the accompanying drawings. In the figures:
FIG. 1 is a first schematic diagram of a composition structure of a cleaning system according to an embodiment of the present disclosure;
FIG. 2 is a first schematic diagram of an implementation process of a cleaning method according to an embodiment of the present disclosure;
FIG. 3 is a second schematic diagram of an implementation process of a cleaning method according to an embodiment of the present disclosure;
FIG. 4 is a third schematic diagram of an implementation process of a cleaning method according to an embodiment of the present disclosure;
FIG. 5 is a schematic diagram of a network framework according to an embodiment of the present disclosure;
FIG. 6 is a second schematic diagram of a composition structure of a cleaning system according to an embodiment of the present disclosure;
FIG. 7 is a front view of a cleaning system according to an embodiment of the present disclosure;
FIG. 8 is a top view of a cleaning system according to an embodiment of the present disclosure;
FIG. 9 is an isometric view of a target tool in a cleaning system according to an embodiment of the present disclosure;
FIG. 10 is a top view of a target tool in a cleaning system according to an embodiment of the present disclosure;
FIG. 11 is a first perspective view of a target tool in a cleaning system according to an embodiment of the present disclosure;
FIG. 12 is a second perspective view of a target tool in a cleaning system according to an embodiment of the present disclosure;
FIG. 13 is a schematic diagram showing a connection between a base body and a cleaning plate in a target tool according to an embodiment of the present disclosure; and
FIG. 14 is a schematic structural diagram of a tool bracket in a cleaning system according to an embodiment of the present disclosure.

List of reference signs:
1 - control device; 2 - quick swap platform; 21 - base; 211 - placement section; 212 - working section; 22 - moving member; 23 - platform driving member; 3 - clamping jaw device; 31 - side clamp; 311 - clamping block; 4 - plasma cleaning machine; 5 - power mechanism; 51 - clamping jaw power assembly; 511 - first clamping jaw driving member; 512 - sliding rail; 513 - sliding block; 514 - second clamping jaw driving member; 52 - side clamp power assembly; 6 - protective frame; 7 - target tool; 71 - base body; 711 - carrying portion; 712 - clamping portion; 713 - connecting hole; 72 - cleaning plate; 721 - connecting column; 73 - tool bracket; 731 - placement portion; 732 - pin shaft; 733 - supporting portion; 734 - handle; 735 - identification portion.

### Detailed Description of Embodiments

Technical solutions in embodiments of the present disclosure are clearly and completely described below with reference to the accompanying drawings in the embodiments of the present disclosure. It may be understood that the specific embodiments described herein are only intended to explain the related application, but not to limit this application. It should also be noted that, for ease of description, only parts related to the related application are shown in the accompanying drawings.

Currently, new energy batteries are increasingly widely used in life and industry. The new energy batteries are not only used in energy storage power systems such as hydraulic power, thermal power, wind power and solar power stations, but also widely used in electric vehicles such as electric bicycles, electric motorcycles, electric vehicles, aerospace and other fields.

In the embodiments of the present disclosure, the battery may be a battery cell. The battery cell refers to a basic unit that can achieve mutual conversion between chemical energy and electric energy, and may be used to manufacture a battery module or a battery pack, so as to supply power to a power consuming device. The battery cell may be a secondary battery. The secondary battery refers to a battery cell of which active materials can be activated by means of charging for reuse after the battery cell is discharged. The battery cell may be a lithium-ion battery, a sodium-ion battery, a sodium-lithium-ion battery, a lithium metal battery, a sodium metal battery, a lithium sulfur battery, a magnesium-ion battery, a nickel-hydrogen battery, a nickel-cadmium battery, a lead storage battery, etc., which is not limited in the embodiments of the present disclosure.

In the embodiments of the present disclosure, the battery may also be a single physical module including one or more battery cells to provide higher voltage and capacity. When a plurality of battery cells are provided, the plurality of battery cells are in series connection, in parallel connection or in series-parallel connection by means of a busbar component. The battery may be a battery module or a battery pack.

During assembly of assembled batteries into a battery case, before battery modules are assembled into a case for assembled batteries, a cleaning apparatus is used to clean each battery module, and then the battery modules are assembled into the case for the assembled batteries to meet assembly requirements. The effect of cleaning is verified by means of an ink test of a first cleaned battery module at the beginning of each shift. A specific operation process of cleaning a first-article battery module is as follows:
(1) the cleaning of the first battery module of a current shift is completed;
(2) a robot takes the module to a detection position;
(3) a worker enters the apparatus to perform a cleaning effect test on the battery module;
(4) after the test is completed, a first-article result is input into a computer and uploaded to a manufacturing execution system (MES) to complete a first-article task;
(5) the robot cleans the first battery module again (removing substances remaining on a surface during the test);
(6) the robot assembles the first battery module to the case for the assembled batteries; and
(7) the robot continues to grab the next battery module and clean and put the battery module into the case.

It can be seen that a current cleaning method needs to be performed in a production line. When the first-article battery module is cleaned, it is necessary to first suspend the production line, and then the cleaning apparatus is used to clean the first battery module and verify a cleaning effect, which affects normal production of the production line of assembled batteries. Moreover, an operator needs to enter the apparatus to operate, which is not only inconvenient to operate, but also risky.

In order to solve the problems existing in the current cleaning method, embodiments of the present disclosure provide a cleaning method and system. The cleaning system includes a control device, a quick swap platform, and a clamping jaw device. The control device can determine whether there is a target tool on the quick swap platform according to target first-article information when receiving the target first-article information, where the target first-article information represents blueprint information of a first-article battery module; and the target tool is a tool configured to be cleaned instead of the first-article battery module; and when it is determined that there is the target tool on the quick swap platform, the clamping jaw device is controlled to grab the target tool for cleaning, which can effectively improve operation convenience without affecting normal production and improve production efficiency.

Technical solutions in embodiments of the present disclosure are clearly and completely described below with reference to the accompanying drawings in the embodiments of the present disclosure.

An embodiment of the present disclosure provides a cleaning method applied to a cleaning system.

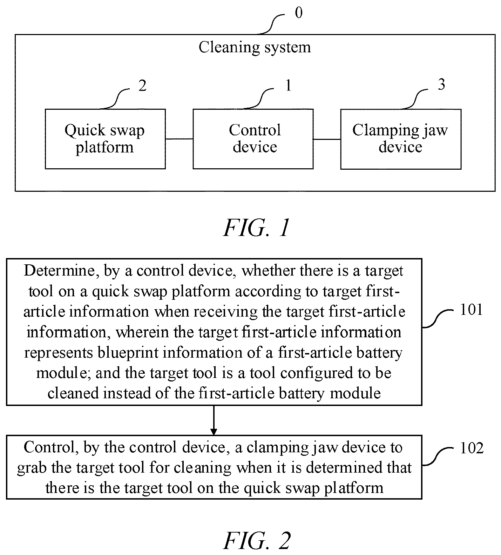

FIG. 1 is a first schematic diagram of a composition structure of a cleaning system according to an embodiment of the present disclosure. As shown in FIG. 1, the cleaning system 0 may include a control device 1, a quick swap platform 2, and a clamping jaw device 3, and the control device 1 may be connected to the quick swap platform 2 and the clamping jaw device 3, where the control device 1 may be any one of a programmable logic controller (PLC), a single-chip microcomputer, an intermediary computer, and an upper computer; and is configured to determine whether there is a target tool on the quick swap platform according to target first-article information when receiving the target first-article information, where the target first-article information represents blueprint information of a first-article battery module; and the target tool is a tool configured to be cleaned instead of the first-article battery module; and the control device controls the clamping jaw device to grab the target tool for cleaning when it is determined that there is the target tool on the quick swap platform. The quick swap platform 2 may be configured to place the tool. The clamping jaw device 3 may be configured to grab the tool placed on the quick swap platform 2.

In the embodiments of the present disclosure, FIG. 2 is a first schematic diagram of an implementation process of a cleaning method according to an embodiment of the present disclosure. As shown in FIG. 2, the method for performing cleaning by a cleaning system may include the following steps.

At step 101, a control device determines whether there is a target tool on a quick swap platform according to target first-article information when receiving the target first-article information, where the target first-article information represents blueprint information of a first-article battery module; and the target tool is a tool configured to be cleaned instead of the first-article battery module.

In the embodiments of the present disclosure, the control device may first determine whether there is the target tool on the quick swap platform according to blueprint type information of the battery module when receiving the blueprint type information of the battery module, where the blueprint type information of the battery module represents the blueprint information of the first-article battery module to be cleaned; and the target tool is a tool configured to be cleaned instead of the first-article battery module.

It should be noted that in the embodiments of the present disclosure, when the cleaning system starts first-article cleaning, the control device in the cleaning system may receive the target first-article information by means of a human-machine interaction module, where the human-machine interaction module may be a human machine interface (HMI).

For example, an operator may perform, by means of the HMI, a selection operation on the first-article battery module that needs to be cleaned, and after receiving selection operation information of the first-article battery module, the HMI sends the target first-article information to the control device, or the control device receives the target first-article information by means of the HMI.

It should be noted that in the embodiments of the present disclosure, the target tool may be one of multiple tools, and different tools may be used to perform cleaning instead of different first-article battery modules.

It should be noted that, in the embodiments of the present disclosure, multiple same or different tools may be placed on the quick swap platform, and the control device needs to first determine whether there is, on the quick swap platform, a target tool corresponding to the first-article battery module that needs to be cleaned currently, so that a subsequent cleaning operation will be performed only when it is determined that there is the target tool on the quick swap platform.

At step 102, the control device controls the clamping jaw device to grab the target tool for cleaning when it is determined that there is the target tool on the quick swap platform.

In the embodiments of the present disclosure, after determining whether there is a target tool on the quick swap platform according to target first-article information when receiving the target first-article information, the control device can control the clamping jaw device to grab the target tool for cleaning when it is determined that there is the target tool on the quick swap platform.

In some embodiments of the present disclosure, if the control device determines that there is no target tool on the quick swap platform, alarm processing can be performed by means of the human-machine interaction module, for example, alarm processing can be performed by displaying alarm prompt information to prompt the operator that there is no target tool on the quick swap platform.

In some embodiments of the present disclosure, the cleaning system further includes a plasma cleaning machine.

In some embodiments of the present disclosure, the clamping jaw device includes a side clamp.

In some embodiments of the present disclosure, when controlling the clamping jaw device to grab the target tool for cleaning, the control device may control the clamping jaw device to move to a grabbing position corresponding to the target tool; controlling the side clamp to grab the target tool based on the grabbing position, and controlling the clamping jaw device to move to a cleaning position when the side clamp grabs the target tool; and controlling the plasma cleaning machine to clean the target tool.

It should be noted that in the embodiments of the present disclosure, when the clamping jaw device is controlled to move to the grabbing position corresponding to the target tool, the clamping jaw device may be first controlled to move to a position above the target tool, and then the clamping jaw device may be controlled to move toward the target tool in a vertical direction perpendicular to a ground, which is equivalent to moving in a Z-axis in a three-dimensional coordinate system until the clamping jaw device moves to the grabbing position.

It may be understood that in the embodiments of the present disclosure, the grabbing position may be a position above the target tool, and when the clamping jaw device moves to the grabbing position, the control device can grab the target tool by controlling the side clamp in the clamping jaw device to perform a grabbing action.

It may be understood that in the embodiments of the present disclosure, the cleaning position represents a position at which the cleaning of the target tool can be completed based on the plasma cleaning machine.

In some embodiments of the present disclosure, after the clamping jaw device is controlled to move to the cleaning position, the operator can splash ink onto the target tool grabbed on the side clamp, and then the control device can control the plasma cleaning machine to perform a cleaning operation in response to a cleaning start instruction.

For example, the cleaning position may be a position located diagonally above the plasma cleaning machine. The control device controls the clamping jaw device to grab and move the target tool to the cleaning position. Then, after the operator splashes ink onto the target tool, a start operation on the plasma cleaning machine can be performed, for example, a start button of the plasma cleaning machine is pressed or a start operation on the plasma cleaning machine is performed on the human-machine interaction module, so that the plasma cleaning machine will send a cleaning start instruction to the control device, and the control device will start to control the plasma cleaning machine to perform the cleaning operation on the target tool in response to the cleaning start instruction.

It should be noted that in the embodiments of the present disclosure, when the control device controls the plasma cleaning machine to clean the target tool, the plasma cleaning machine may be controlled to clean a cleaning plate.

It should also be noted that in the embodiments of the present disclosure, the cleaning plate is made of the same material as the first-article battery module.

That is to say, in the embodiments of the present disclosure, since the cleaning plate in the target tool is made of the same material as the first-article battery module, when the control device controls the plasma cleaning machine to perform a cleaning operation on the target tool, the cleaning of the target tool can be completed by cleaning only the cleaning plate in the target tool rather than cleaning the entire structure of the target tool.

In some embodiments of the present disclosure, after the cleaning of the target tool is completed, a cleaning effect test may also be performed based on the target tool.

In some embodiments of the present disclosure, after controlling the clamping jaw device to grab the target tool for cleaning, the control device may control the clamping jaw device to place the target tool back on the quick swap platform to perform the cleaning effect test.

In some embodiments of the present disclosure, after the control device of the cleaning system controls the clamping jaw device to grab the target tool for cleaning, the cleaning system may also perform a cleaning operation on battery modules when the cleaning effect test of the target tool is passed, where the cleaning operation on battery modules includes a cleaning operation on the first-article battery module and battery modules other than the first-article battery module.

In some embodiments of the present disclosure, after the battery modules are cleaned, battery case assembly can be performed based on the cleaned battery modules, that is, a process of allowing the modules to enter the case is performed.

For example, when the cleaning effect test is performed, the operator may flip the target tool to allow the cleaning plate in the target tool to face upward, and then the cleaning effect test is performed on a surface of the cleaning plate.

In some embodiments of the present disclosure, when the operator performs the cleaning effect test on the surface of the cleaning plate, dyne ink may be used to smear on the surface of the cleaning plate, and then a dyne value of the surface of the cleaning plate is obtained. When the dyne value of the surface of the cleaning plate meets a preset value range, it can be determined that the cleaning effect test is passed.

In the embodiments of the present disclosure, since the cleaning effect test is performed outside a production line apparatus, the production line apparatus can continue to produce while the cleaning effect test is performed, thereby improving the production efficiency.

It should be noted that in the embodiments of the present disclosure, the cleaning method implemented based on the quick swap platform, the clamping jaw device and the tool does not affect the production line of assembled batteries, so that it is not necessary to suspend the production line, and a first-article cleaning process can be performed simultaneously with other assembly of, for example, a battery case for assembled batteries, without affecting production capacity. In addition, compared with current related technologies, the cleaning method according to the present disclosure allows for more convenient cleaning of battery modules on a manipulator, reduces participation of workers, has a higher degree of automation, and effectively improves safety performance.

In some embodiments of the present disclosure, the quick swap platform may include a laser through-beam sensor and a reader-writer.

In some embodiments of the present disclosure, when determining whether there is the target tool on the quick swap platform according to the blueprint type information of the battery module, the control device may detect whether there is a tool on the quick swap platform based on the laser through-beam sensor; a radio frequency identification (RFID) chip corresponding to the tool is read by means of the reader-writer when it is determined that there is the tool on the quick swap platform, so as to obtain identity information of the tool; and whether the tool is the target tool is determined according to the identity information of the tool and the blueprint type information of the battery module.

In some embodiments of the present disclosure, the quick swap platform may further include a tool bracket, the tool is placed on the tool bracket, and the radio frequency identification chip is located at a bottom of the tool bracket.

It should be noted that in the embodiments of the present disclosure, different tools may be supported by means of different tool brackets, that is, a tool is placed on the quick swap platform based on a tool bracket corresponding to the tool, a bottom of this corresponding tool bracket is provided with a radio frequency identification chip, and identity information of the tool placed on this tool bracket can be determined by reading the radio frequency identification chip.

It should also be noted that in the embodiments of the present disclosure, the radio frequency identification chip may store the identity information of the tool, for example, the identity information of the tool may be blueprint type information, and the blueprint type information may include relevant information of a battery module and product corresponding to this tool.

In some embodiments of the present disclosure, the quick swap platform further includes a placement section and a working section.

In some embodiments of the present disclosure, after controlling the clamping jaw device to grab the target tool for cleaning when it is determined that there is the target tool on the quick swap platform, the control device may control the clamping jaw device to place the target tool at the placement section.

In some embodiments of the present disclosure, after controlling the clamping jaw device to place the target tool at the placement section, the control device may control the quick swap platform to pull the target tool located at the placement section to the working section.

In some embodiments of the present disclosure, the control device may further control the quick swap platform to move out when receiving a moving-out operation instruction of the quick swap platform; or control the quick swap platform to move back when receiving a moving-back operation instruction of the quick swap platform.

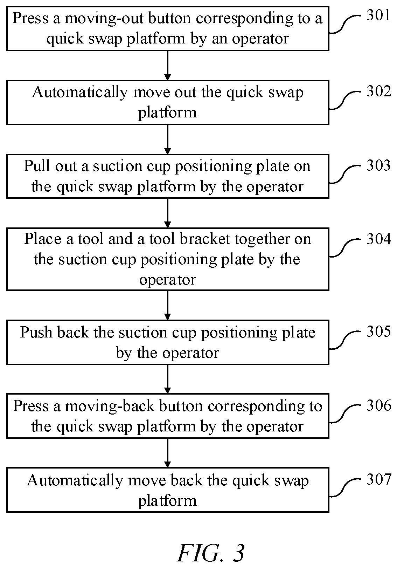

For example, the moving-out operation or the moving-back operation of the quick swap platform may be applied to a usage scenario where a tool needs to be placed or replaced on the quick swap platform, such as a scenario where there is no tool on the quick swap platform and the operator needs to place a tool on the quick swap platform for subsequent use. As shown in FIG. 3, the method may include the following steps.

At step 301, an operator presses a moving-out button corresponding to a quick swap platform.

In this embodiment, when a tool is placed on the quick swap platform, the operator may press the moving-out button corresponding to the quick swap platform after preparing the tool, and a control device performs step 302 in response to a moving-out operation instruction.

At step 302, the quick swap platform is automatically moved out.

At step 303, the operator pulls out a suction cup positioning plate on the quick swap platform.

At step 304, the operator places the tool and a tool bracket together on the suction cup positioning plate.

At step 305, the operator pushes back the suction cup positioning plate.

At step 306, the operator presses a moving-back button corresponding to the quick swap platform.

At step 307, the quick swap platform is controlled to move back automatically.

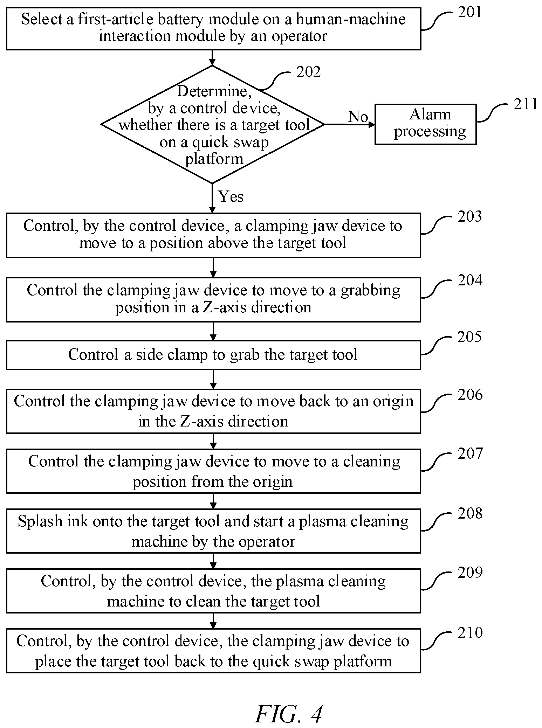

For example, as shown in FIG. 4, when a plasma first-article cleaning process is started, the method may include the following steps.

At step 201, an operator selects a first-article battery module on a human-machine interaction module.

At step 202, a control device determines whether there is a target tool on a quick swap platform.

In this embodiment, the control device determines whether there is the target tool on the quick swap platform, including determining whether there is a tool on the quick swap platform and determining whether the tool is the target tool, and then execute step 203 when it is determined that there is the target tool, or execute step 211 when it is determined that there is no target tool.

At step 203, the control device controls a clamping jaw device to move to a position above the target tool.

At step 204, the clamping jaw device is controlled to move to a grabbing position in a Z-axis direction.

At step 205, a side clamp is controlled to grab the target tool.

At step 206, the clamping jaw device is controlled to move back to an origin in the Z-axis direction.

At step 207, the clamping jaw device is controlled to move to a cleaning position from the origin.

For example, the cleaning position may be a position diagonally above a plasma cleaning machine.

At step 208, the operator splashes ink onto the target tool and starts the plasma cleaning machine.

At step 209, the control device controls the plasma cleaning machine to clean the target tool.

At step 210, the control device controls the clamping jaw device to place the target tool back to the quick swap platform.

In this embodiment, after the target tool is cleaned by the plasma cleaning machine, the plasma first-article cleaning process is completed.

At step 211, alarm processing is performed.

In this embodiment, the control device may perform the alarm processing to prompt the operator that there is no target tool on the current quick swap platform; and the cleaning operation can be continued after the target tool is placed on the quick swap platform.

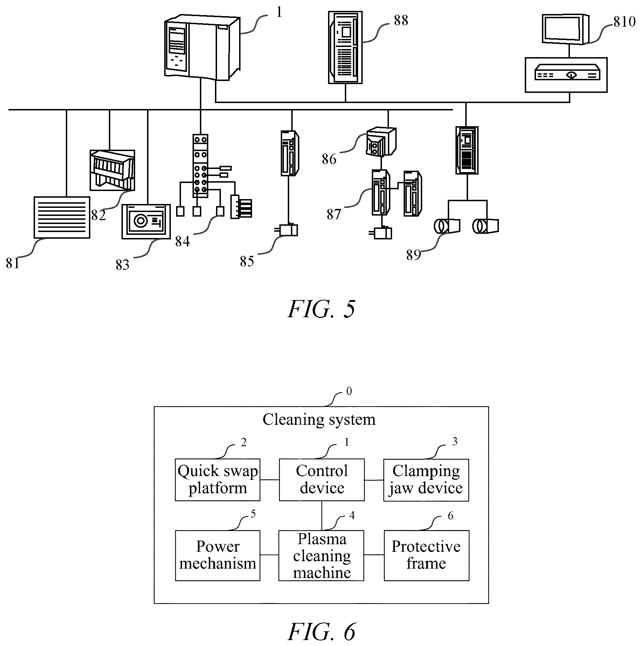

In the embodiments of the present disclosure, in the production line of assembled batteries, a network framework of assembling battery modules into a case may be as shown in FIG. 5. The control device 1 may be a PLC, and the control device 1 may be connected to a valve terminal 81, a distributed input-output module 82, a human-machine interaction module 83, a remote input-output module 84, a servo motor 85, a small PLC 86, and a servo controller 87. In addition, the control device 1 may be connected to a PC terminal 88 of an MES, and the PC terminal 88 of the MES may be connected to a camera 89 and a video monitoring system 810. The camera 89 may be a charge coupled device (CCD).

In an embodiment of the present disclosure, a cleaning method is provided, and is applied to a cleaning system. The cleaning system includes a control device, a quick swap platform, and a clamping jaw device. determining, by the control device, whether there is a target tool on the quick swap platform according to target first-article information when receiving the target first-article information, where the target first-article information represents blueprint information of a first-article battery module to be cleaned; and the target tool is a tool configured to be cleaned instead of the first-article battery module; and the control device controls the clamping jaw device to grab the target tool for cleaning when it is determined that there is the target tool on the quick swap platform. Therefore, it can be seen that, when the cleaning system cleans the first-article battery module, the control device in the cleaning system may determine, according to the first-article battery module that needs to be cleaned, whether there is a tool configured to be cleaned instead of the first-article battery module on the quick swap platform, that is, the target tool, so as to control the clamping jaw device to grab the target tool for cleaning when it is determined that there is the target tool on the quick swap platform. Outside a production line corresponding to the battery modules, the quick swap platform and the clamping jaw device can be used to complete the cleaning of the first-article battery module, thus effectively improving the operation convenience of cleaning the first-article battery module and thereby improving the production efficiency.

Based on the aforementioned embodiment, in another embodiment of the present disclosure, a cleaning system is provided. As shown in FIGS. 6, 7 and 9, the cleaning system 0 may include a control device 1, a quick swap platform 2, a clamping jaw device 3, a plasma cleaning machine 4, a power mechanism 5, and a protective frame 6.

In the embodiments of the present disclosure, the control device 1 may be connected to the quick swap platform 2 and the clamping jaw device 3, and the control device 1 is configured to control, when it is determined that there is a target tool 7 on the quick swap platform 2 based on target first-article information, the clamping jaw device 3 to grab and move the target tool 7 to the plasma cleaning machine 4 for cleaning; and the quick swap platform 2 is configured to place the target tool 7.

In some embodiments of the present disclosure, the control device 1 may determine whether there is the target tool 7 on the quick swap platform 2 according to blueprint type information of the battery module when receiving the target first-article information, where the target first-article information represents blueprint information of a first-article battery module; and the target tool 7 is a tool configured to be cleaned instead of the first-article battery module; and the control device controls the clamping jaw device 3 to grab the target tool 7 for cleaning when it is determined that there is the target tool 7 on the quick swap platform 2.

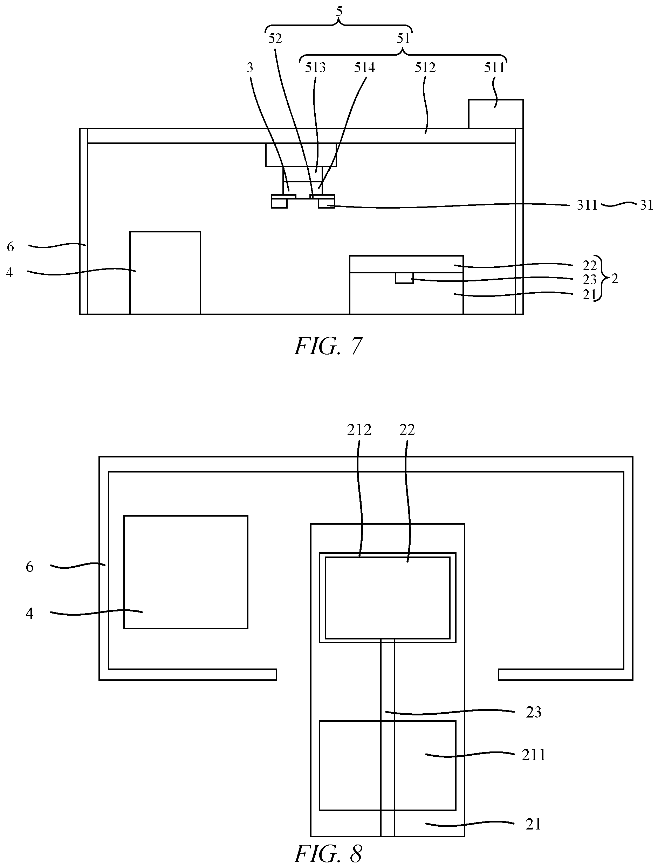

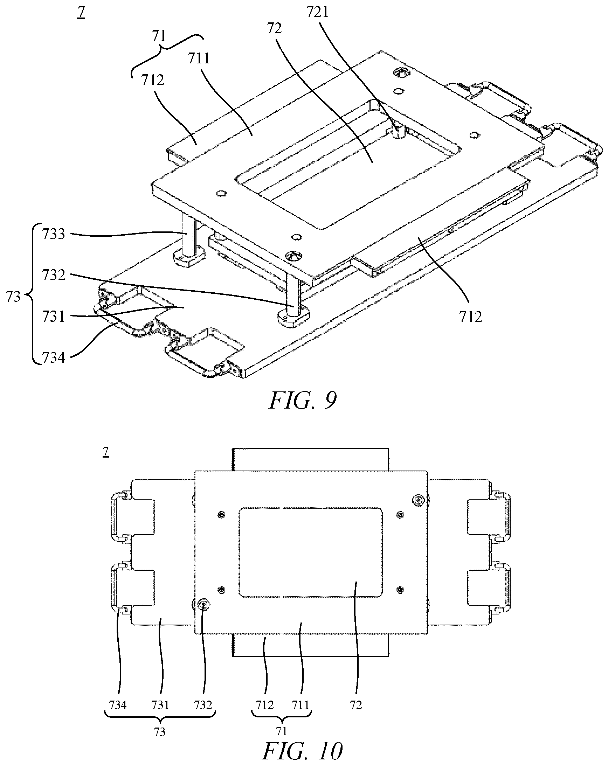

As shown in FIGS. 7 and 9, in some embodiments of the present disclosure, the clamping jaw device 3 includes a side clamp 31, and the side clamp 31 may be configured to grab the target tool 7.

In some embodiments of the present disclosure, the plasma cleaning machine 4 may be configured to clean the target tool 7.

In some embodiments of the present disclosure, the protective frame 6 is of a truss structure formed by connecting multiple support rods, and an accommodation chamber is provided inside the protective frame. The plasma cleaning machine 4, the clamping jaw device 3, and the like are arranged in the accommodation chamber, and are protected by the protective frame 6. A protective net and the like may be arranged outside the protective frame 6, which is not limited in the embodiments of the present disclosure.

As shown in FIGS. 7 and 9, in some embodiments of the present disclosure, the side clamp 31 includes at least two clamping blocks 311. For example, two clamping blocks 311 are provided, and the two clamping blocks 311 may move close to each other to clamp the target tool 7, or the two clamping blocks 311 may move away from each other to release the target tool 7.

In some embodiments of the present disclosure, the clamping jaw device 3 may further include multiple side clamps 31. The multiple side clamps 31 are linearly arranged, which can achieve multi-point clamping of the target tool 7 to improve the clamping stability; or the multiple side clamps 31 clamp the target tool 7 from different directions, so as to reduce the possibility of the target tool 7 tilting due to uneven force distribution.

As shown in FIG. 7, the power mechanism 5 includes a clamping jaw power assembly 51 and a side clamp power assembly 52. The clamping jaw power assembly 51 is fixed relative to the quick swap platform 2, and is configured to drive the clamping jaw device 3 to move between the quick swap platform 2 and the plasma cleaning machine 4; and the side clamp power assembly 52 is connected to the clamping jaw power assembly 51, and is configured to drive the at least two clamping blocks 311 to move close to or away from each other.

In some embodiments of the present disclosure, the clamping jaw power assembly 51 includes a clamping jaw driving member (such as a first clamping jaw driving member 511 or a second clamping jaw driving member 514 shown in FIG. 7). The clamping jaw driving member may be a telescopic cylinder, such as an air cylinder or a hydraulic cylinder, or the clamping jaw driving member may be an electric motor, such as a servo motor or a stepping motor. One or more clamping jaw driving members may be provided, and the multiple clamping jaw driving members may be respectively configured to drive the clamping jaw device 3 to move in different directions.

For example, the clamping jaw power assembly 51 includes a first clamping jaw driving member 511. The first clamping jaw driving member 511 is fixed to the protective frame 6 and configured to drive the clamping jaw device 3 to move horizontally, such that the clamping jaw device 3 horizontally moves from a position at the quick swap platform 2 to a position at the plasma cleaning machine 4, or the clamping jaw device 3 horizontally moves from the position at the plasma cleaning machine 4 to the position at the quick swap platform 2.

In some embodiments of the present disclosure, the clamping jaw power assembly 51 further includes a sliding rail 512 and a sliding block 513. The sliding rail 512 is fixedly connected to the protective frame 6, and the sliding block 513 is slidably connected to the sliding rail 512. The clamping jaw device 3 is connected to the sliding block 513, and the first clamping jaw driving member 511 is in transmission connection with the sliding block 513 to drive the sliding block 513 to horizontally move the clamping jaw device 3 the position at the quick swap platform 2 or the position at the plasma cleaning machine 4.

In some embodiments of the present disclosure, the first clamping jaw driving member 511 is an electric motor, and the first clamping jaw driving member 511 may be in transmission connection with the sliding block 513 by means of belt transmission, chain transmission, gear transmission, rack-and-pinion transmission, worm gear transmission, or the like. For example, the first clamping jaw driving member 511 drives the sliding block 513 by means of a rack and pinion.

In some embodiments of the present disclosure, the clamping jaw power assembly 51 further includes a second clamping jaw driving member 514. The second clamping jaw driving member 514 is fixedly connected to the sliding block 513, and the second clamping jaw driving member 514 is configured to drive the clamping jaw device 3 to move in a vertical direction, such that when the clamping jaw device 3 moves to the position at the quick swap platform 2, the second clamping jaw driving member 514 drives the clamping jaw device 3 to move close to or away from the quick swap platform 2 in the vertical direction, so as to grab the target tool 7 on the quick swap platform 2. Alternatively, when the clamping jaw device 3 moves to the position at the plasma cleaning machine 4, the second clamping jaw driving member 514 drives the clamping jaw device 3 to move close to or away from the plasma cleaning machine 4 in the vertical direction, so as to clean the target tool 7. In some embodiments of the present disclosure, the second clamping jaw driving member 514 is a hydraulic cylinder, and the clamping jaw device 3 is fixedly connected to an output end of the second clamping jaw driving member 514.

In some embodiments of the present disclosure, the side clamp power assembly 52 may include a telescopic cylinder, such as an air cylinder or a hydraulic cylinder, or the side clamp power assembly 52 may include an electric motor, such as a servo motor or a stepping motor. For example, the side clamp power assembly 52 includes an air cylinder, and the side clamp power assembly 52 is in transmission connection with the clamping blocks 311 to drive the two oppositely arranged clamping blocks 311 to move close to or away from each other.

Here, the power mechanism 5 drives the clamping jaw device 3 to move or grab, which is simple in structure and easy to implement.

As shown in FIGS. 7 and 8, in some embodiments of the present disclosure, the quick swap platform 2 is arranged at an opening of the protective frame 6, and the quick swap platform 2 includes a base 21 and a moving member 22. The base 21 includes a placement section 211 provided outside the protective frame 6 and a working section 212 provided inside the protective frame 6. The moving member 22 is connected to the base 21, the moving member 22 is configured to place the target tool 7, and the moving member 22 is movable between the placement section 211 and the working section 212 relative to the base 21.

In some embodiments of the present disclosure, the moving member 22 may be slidably connected to the base 21. For example, the base 21 is provided with a guide rail, and the moving member 22 is slidably connected to the guide rail. To allow the moving member 22 receives force in a more balanced manner, multiple guide rails may be arranged to provide stable support for the moving member 22.

In the embodiments of the present disclosure, the moving member 22 may be of a plate-like structure, a blocky structure, a columnar structure, etc. For example, the moving member 22 is of a plate-like structure, the thickness direction of the moving member 22 is set in a vertical direction, and two ends of the moving member 22 in a length direction thereof are slidably connected to the base 21.

As shown in FIGS. 7 and 8, in some embodiments of the present disclosure, the quick swap platform 2 further includes a platform driving member 23. The platform driving member 23 is connected to the base 21, an output shaft of the platform driving member 23 is in transmission connection with the moving member 22, and the platform driving member 23 is configured to drive the moving member 22 to move relative to the base 21.

In the embodiments of the present disclosure, the platform driving member 23 may be a telescopic cylinder, such as an air cylinder or a hydraulic cylinder, or the platform driving member 23 may be an electric motor, such as a servo motor or a stepping motor. The platform driving member 23 may be in transmission connection with the moving member 22 by means of belt transmission, chain transmission, gear transmission, rack-and-pinion transmission, worm gear transmission, or the like. For example, the platform driving member 23 is an electric motor, and the platform driving member 23 is in transmission connection with the moving member 22 by means of a ball screw.

Here, the moving member 22 can move between the placement section 211 and the working section 212 of the base 21. When the moving member 22 is located at the working section 212, the clamping jaw device 3 can conveniently move the target tool 7 at the working section 212 to the plasma cleaning machine 4 for cleaning. When the moving member 22 is located at the placement section 211, the operator can conveniently take the target tool 7 from the outside of the protective frame 6 for testing.

In the embodiments of the present disclosure, a battery production line may be further provided. The battery production line includes a feeding mechanism (not shown) and a cleaning system according to an embodiment of the present disclosure, the feeding mechanism being configured to convey a workpiece to a quick swap platform 2 of the cleaning system, where the workpiece may be a battery cell, a battery module, a battery case, or the like.

In the embodiments of the present disclosure, there are multiple possible forms of the feeding mechanism. For example, the feeding mechanism is a conveyor belt, which has a simple structure and high transportation efficiency. For another example, the feeding mechanism is an arm robot, which can achieve more complicated operations. For another example, the feeding mechanism is a feeding carriage, which can feed materials over a long distance.

As shown in FIGS. 7, 9 and 10, in some embodiments of the present disclosure, a target tool 7 is provided. The target tool 7 includes a base body 71 and a cleaning plate 72. The base body 71 is configured to be grabbed by the clamping jaw device 3. The cleaning plate 72 is connected to one side of the base body 71, and the cleaning plate 72 is made of the same material as the first-article battery module. Performing a cleaning test on the cleaning plate 72 is equivalent to performing a cleaning test on the first-article battery module.

In the embodiments of the present disclosure, the base body 71 may be of a blocky structure, a plate-like structure, a columnar structure, etc. For example, the base body 71 is of a plate-like structure, and the thickness direction of the base body 71 is set in a vertical direction. The base body is placed on the moving member 22 of the quick swap platform 2. The cleaning plate 72 may be connected to a side of the base body 71 that faces the moving member 22, or a side of the base body 71 that faces away from the moving member 22.

As shown in FIGS. 7 and 9, in some embodiments of the present disclosure, since the clamping jaw device 3 conveys the target tool 7 to an upper side of the plasma cleaning machine 4 for cleaning. To facilitate cleaning, the cleaning plate 72 is connected to the side of the base body 71 that faces the moving member 22.

In the embodiments of the present disclosure, the cleaning plate 72 may be non-detachably connected to the base body 71 by means of welding, bonding, integral molding, etc., or the cleaning plate 72 may be detachably connected to the base body 71 by means of clamping, threaded connection, a fastener, etc. For example, the cleaning plate 72 is connected to the base body 71 by means of a fastener such as a screw.

Here, the cleaning plate 72 is used for cleaning and testing, and the base body 71 is provided to facilitate placement and movement of the cleaning plate 72, so as to reduce the possibility of other components coming into contact with the cleaning plate 72 and staining the cleaning plate 72.

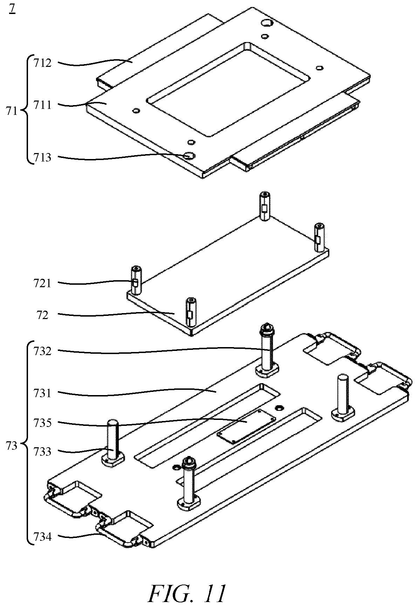

As shown in FIGS. 11, 12 and 13, in some embodiments of the present disclosure, the base body 71 includes a carrying portion 711 and clamping portions 712, and the cleaning plate 72 is detachably connected to the carrying portion 711. As shown in FIGS. 7 and 11, the clamping portions 712 are configured to be grabbed by the clamping jaw device 3. There are at least two clamping portions 712, and the at least two clamping portions 712 are evenly distributed along an edge of the carrying portion 711.

In some embodiments of the present disclosure, the cleaning plate 72 is detachably connected to a lower side of the carrying portion 711 by means of a screw, etc. The carrying portion 711 is of a rectangular plate-like structure, and each clamping portion 712 may be connected to an upper side, the lower side or a peripheral side of the carrying portion 711.

In some embodiments of the present disclosure, a connecting column 721 is further fixedly connected to the cleaning plate 72, and the connecting column 721 is connected to the carrying portion 711 by means of a screw, etc., so as to separate the cleaning plate 72 from the carrying portion 711.

In the embodiments of the present disclosure, the clamping portion 712 may be of a blocky structure, a plate-like structure, a rod-like structure, etc., and the clamping portion 712 may also be a protrusion or a recess, etc. provided on the carrying portion 711. For example, each clamping portion 712 is of a rectangular plate-like structure. There are two clamping portions 712, and the two clamping portions 712 are symmetrically arranged in a width direction of the carrying portion 711.

Here, the arrangement of the clamping portions 712 facilitates the grabbing of the base body 71 by the clamping jaw device 3, and at least two clamping portions 712 are evenly distributed, so that the clamping jaw device 3 can apply a more uniform force to the target tool 7, thereby reducing the possibility of the target tool 7 tilting.

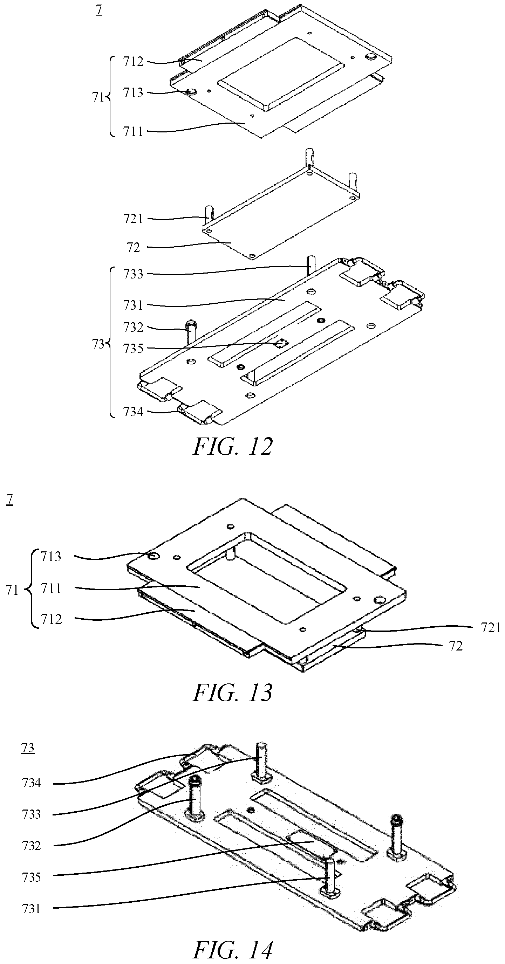

As shown in FIGS. 11, 12 and 14, in some embodiments of the present disclosure, the target tool 7 further includes a tool bracket 73. The tool bracket 73 includes a placement portion 731 and limiting portions (pin shafts 732 as shown in FIG. 14). As shown in FIGS. 7 and 11, the placement portion 731 is used for placing on the quick swap platform 2. The limiting portions are connected to a side of the placement portion 731 away from the quick swap platform 2, and the limiting portions are detachably connected to the base body 71.

In the embodiments of the present disclosure, the tool bracket 73 may be directly placed on the moving member 22, or the tool bracket 73 is detachably connected to the moving member 22 by means of clamping, a fastener, etc., so as to facilitate the replacement with a different type of target tools 7.

In the embodiments of the present disclosure, the placement portion 731 may be of a blocky structure, a plate-like structure, a rod-like structure, etc. For example, the placement portion 731 is of a plate-like structure, and the thickness direction of the placement portion 731 is set in the vertical direction. A lower side surface of the placement portion 731 is attached to an upper side surface of the moving member 22, such that the moving member 22 provides stable support for the placement portion 731.

Here, with the arrangement of the tool bracket 73, the cleaning plate 72 can be supported, and a side of the cleaning plate 72 that needs cleaning is suspended, so as to reduce the possibility of the cleaning plate 72 being stained.

As shown in FIGS. 12, 13 and 14, in some embodiments of the present disclosure, the limiting portion includes a pin shaft 732, the base body 71 is provided with a connecting hole 713, and the pin shaft 732 can extend into the connecting hole 713, such that the pin shaft 732 radially limit the base body 71, thereby fixing the cleaning plate 72 relative to the tool bracket 73.

In the embodiments of the present disclosure, a radial cross-section of the pin shaft 732 may be circular, square, triangular, hexagonal, or the like. The pin shaft 732 with a circular radial cross-section can be connected more conveniently. The pin shaft 732 with a square radial cross-section can be circumferentially limited, to limit the rotation of the pin shaft 732 relative to the base body 71. A radial cross-section of the connecting hole 713 may also be circular, square, triangular, hexagonal, or the like.

For example, the radial cross-section of the pin shaft 732 is circular, and the radial cross-section of the connecting hole 713 matches the radial cross-section of the pin shaft 732, such that when the pin shaft 732 extends into the connecting hole 713, an outer peripheral wall of the pin shaft 732 is attached to an inner peripheral wall of the connecting hole 713.

In the embodiments of the present disclosure, the direction of a central axis of the pin shaft 732 may be set in a horizontal direction or in a vertical direction. To facilitate the connection and separation of the base body 71 and the tool bracket 73, the central axis of the pin shaft 732 is set in the vertical direction, the base body 71 can move in the vertical direction so as to be connected to or separated from the tool bracket 73, and this direction corresponds to a moving direction of the clamping jaw device 3.

In the embodiments of the present disclosure, the pin shaft 732 may be an equal-diameter shaft, or the pin shaft 732 may be a variable-diameter shaft. For example, the pin shaft 732 is a variable-diameter shaft, and an end of the pin shaft 732 away from the placement portion 731 has a gradually reduced radial dimension in a direction away from the placement portion 731, such that a conical structure is formed at the end of the pin shaft 732 away from the placement portion 731, to facilitate the extension into the connecting hole 713.

Here, with the arrangement of the pin shaft 732 and the connecting hole 713, the pin shaft can be connected to or detached from the connecting hole conveniently, the limit in multiple directions can be achieved, and the base body 71 can be stably fixed to the tool bracket 73.

As shown in FIGS. 11, 12 and 14, in some embodiments of the present disclosure, there are at least two pin shafts 732, the two pin shafts 732 form a positioning set, and the two pin shafts 732 in the positioning set are distributed along a diagonal of the placement portion 731. Correspondingly, the base body 71 is also provided with at least two connecting holes 713, and the at least two pin shafts 732 are connected to the at least two connecting holes 713 in a one-to-one correspondence.

In some embodiments of the present disclosure, there are two pin shafts 732, and the two pin shafts 732 are distributed at two vertexes of the placement portion 731 along a diagonal of the placement portion 731. Correspondingly, two connecting holes 713 are distributed at two vertexes of the base body 71 along a diagonal of the base body 71.

Here, the arrangement of the at least two pin shafts 732 can improve the limiting effect, and the two pin shafts 732 in the same positioning set are distributed along the diagonal of the placement portion 731, resulting in a larger spacing between the two pin shafts 732, thereby achieving a better effect of limiting and supporting the base body 71.

As shown in FIGS. 11, 12 and 14, in some embodiments of the present disclosure, the tool bracket 73 further includes supporting portions 733. The supporting portions 733 are connected to the placement portion 731, the supporting portions 733 and the limiting portions are located on the same side of the placement portion 731, and the supporting portions 733 abut against the base body 71.

In the embodiments of the present disclosure, the supporting portion 733 may be of a blocky structure, a plate-like structure, a columnar structure, etc. For example, the supporting portion 733 is of a columnar structure, and the direction of a central axis of the supporting portion 733 is parallel to the direction of the central axis of the pin shaft 732. When the pin shaft 732 extends into the corresponding connecting hole 713, a lower side of the base body 71 abuts against an upper end surface of the supporting portion 733, such that the supporting portion 733 lifts the base body 71 to avoid contact between the cleaning plate 72 on the base body 71 and the placement portion 731.

Here, with the arrangement of the supporting portions 733, the supporting portions 733 can lift the base body 71 relative to the placement portion 731 to avoid contact between the cleaning plate 72 and the placement portion 731, and the side of the cleaning plate 72 that needs cleaning is suspended, so as to reduce the possibility of the cleaning plate 72 being stained.

As shown in FIGS. 11, 12 and 14, in some embodiments of the present disclosure, there may be at least two supporting portions 733, and the at least two supporting portions 733 and at least two limiting portions are alternately distributed along an edge of the placement portion 731. For example, there are two supporting portions 733 and two pin shafts 732, the two supporting portions 733 are arranged at two vertexes of the placement portion 731 along one diagonal of the placement portion 731, and the two pin shafts 732 are arranged at two vertexes of the placement portion 731 along the other diagonal of the placement portion 731.

Here, since the supporting portions 733 and the limiting portions on the placement portion 731 are alternately distributed, the placement portion 731 supports the base body 71 more evenly, and the limiting portions limit the base body 71 more evenly, so that the base body 71 receives force in a more balanced manner, and has a more stable structure.

As shown in FIGS. 11, 12 and 14, in some embodiments of the present disclosure, handles 734 are further arranged at two ends of the placement portion 731 in a length direction of the placement portion, to facilitate the movement of the target tool 7 by the operator by means of the handles 734.

As shown in FIGS. 11 and 14, in some embodiments of the present disclosure, an identification portion 735 is further arranged on the placement portion 731, the identification portion 735 may be provided with a radio frequency identification chip, a reader-writer is arranged on the moving member 22, and the reader-writer can identify the radio frequency identification chip to obtain identity information of the target tool 7.

In some embodiments of the present disclosure, the base body 71 and/or the placement portion 731 is further provided with a weight-reducing hole, which can reduce the weight of the base body 71 and/or the placement portion 731, so as to facilitate the conveying of the target tool 7 and save manufacturing materials.

Those skilled in the art should understand that the embodiments of the present disclosure may be provided as methods, systems, or computer program products. Therefore, the present disclosure may use a form of a hardware embodiment, a software embodiment, or an embodiment with a combination of software and hardware.

### Industrial Applicability

Embodiments of the present disclosure provide a cleaning method and system, which can effectively improve operation convenience without affecting normal production and improve production efficiency.

## Claims

1. A cleaning method applied to a cleaning system for cleaning battery modules, the cleaning system comprising a control device (1), a quick swap platform (2), a clamping jaw device (3) and a plasma cleaning machine (4), the clamping jaw device (3) comprising a side clamp (31), the battery modules comprising a first-article battery module and a battery module other than the first-article battery module, the method being **characterised in that** it comprises the steps of:
determining, by the control device (1), whether there is a target tool (7) on the quick swap platform (2) according to target first-article information when receiving the target first-article information, wherein the target first-article information represents blueprint information of the first-article battery module; the target tool (7) is a tool configured to be cleaned instead of the first-article battery module; the target tool (7) comprises a cleaning plate (72); and the cleaning plate (72) is made of the same material as the first-article battery module; and
controlling, by the control device (1), the clamping jaw device (3) to move to a grabbing position corresponding to the target tool (7) when it is determined that there is the target tool (7) on the quick swap platform (2); controlling, by the control device (1), the side clamp (31) to grab the target tool (7) based on the grabbing position; controlling, by the control device (1), the clamping jaw device (3) to move to a cleaning position when the side clamp (31) grabs the target tool (7); and controlling, by the control device (1), the plasma cleaning machine (4) to clean the cleaning plate (72) in the target tool (7);
performing, by the cleaning system, a cleaning operation on the battery modules when a cleaning effect test on the target tool (7) is passed.

2. The cleaning method according to claim 1, wherein the quick swap platform (2) comprises a laser through-beam sensor and a reader-writer; and determining whether there is a target tool (7) on the quick swap platform (2) according to target first-article information comprises:
detecting, by the control device (1), whether there is a tool on the quick swap platform (2) based on the laser through-beam sensor;
reading a radio frequency identification chip corresponding to the tool by means of the reader-writer when it is determined that there is the tool on the quick swap platform (2), so as to obtain identity information of the tool; and
determining whether the tool is the target tool (7) according to the identity information of the tool and the target first-article information.

3. The cleaning method according to claim 2, wherein
the quick swap platform (2) comprises a tool bracket (73), the tool is placed on the tool bracket (73), and the radio frequency identification chip is located at a bottom of the tool bracket (73).

4. The cleaning method according to claim 1, wherein the quick swap platform (2) comprises a placement section (211), and after controlling the plasma cleaning machine (4) to clean the cleaning plate (72) in the target tool (7), the method further comprises:
controlling, by the control device (1), the clamping jaw device (3) to place the target tool (7) at the placement section (211).

5. The cleaning method according to claim 4, wherein the quick swap platform (2) comprises a working section (212), and after controlling, by the control device (1), the clamping jaw device (3) to place the target tool (7) at the placement section (211), the method further comprises:
controlling, by the control device (1), the quick swap platform (2) to pull the target tool (7) at the placement section (211) to the working section (212).

6. The cleaning method according to claim 1 or 5, further comprising:
controlling, by the control device (1), the quick swap platform (2) to move out when receiving a moving-out operation instruction of the quick swap platform (2); or
controlling, by the control device (1), the quick swap platform (2) to move back when receiving a moving-back operation instruction of the quick swap platform (2).

7. A cleaning system for cleaning battery modules, the cleaning system comprising a quick swap platform (2), a clamping jaw device (3), a plasma cleaning machine (4), and a control device (1), the battery modules comprising a first-article battery module and a battery module other than the first-article battery module, wherein
the quick swap platform (2) and the clamping jaw device (3) are connected to the control device (1); the cleaning system being **characterised in that**:
the control device (1) is configured to control, when it is determined that there is a target tool (7) on the quick swap platform (2) based on target first-article information, the clamping jaw device (3) to grab and move the target tool (7) to the plasma cleaning machine (4) for cleaning, wherein the target first-article information represents blueprint information of a first-article battery module; the target tool (7) is a tool configured to be cleaned instead of the first-article battery module; the target tool (7) comprises a cleaning plate (72); the cleaning plate (72) is made of the same material as the first-article battery module; and a cleaning operation on the battery modules by the cleaning system is performed when the cleaning effect test on the target tool (7) is passed; and
the quick swap platform (2) is configured to place the target tool (7).

8. The cleaning system according to claim 7, wherein the clamping jaw device (3) comprises a side clamp (31), the side clamp (31) comprising at least two clamping blocks (311), and
the side clamp (31) being configured to grab the target tool (7);
preferably,
further comprising a power mechanism (5), which comprises:
a clamping jaw power assembly (51), which is fixed relative to the quick swap platform (2) and is configured to drive the clamping jaw device (3) to move between the quick swap platform (2) and the plasma cleaning machine (4); and
a side clamp power assembly (52), which is connected to the clamping jaw power assembly (51) and is configured to drive the at least two clamping blocks (311) to move close to or away from each other.

9. The cleaning system according to claim 7, further comprising a protective frame (6), wherein the quick swap platform (2) is arranged at an opening of the protective frame (6), and the quick swap platform (2) comprises:
a base (21), which comprises a placement section (211) provided outside the protective frame (6) and a working section (212) provided inside the protective frame (6);
a moving member (22), which is connected to the base (21), is configured to place the target tool (7), and is movable between the placement section (211) and the working section (212) relative to the base (21); and
a platform driving member (23), which is connected to the base (21), has an output shaft in transmission connection with the moving member (22), and is configured to drive the moving member (22) to move relative to the base (21).

10. The cleaning system according to any one of claims 7 to 9, wherein the target tool (7) comprises:
a base body (71) configured to be grabbed by the clamping jaw device (3); and
the cleaning plate (72) connected to one side of the base body (71).

11. The cleaning system according to claim 10, wherein the base body (71) comprises a carrying portion (711) and clamping portions (712), the cleaning plate (72) is detachably connected to the carrying portion (711), the clamping portions (712) are configured to be grabbed by the clamping jaw device (3), and at least two clamping portions (712) are provided and are evenly distributed along an edge of the carrying portion (711).

12. The cleaning system according to claim 11, further comprising a tool bracket (73), which comprises:
a placement portion (731) configured to be placed on the quick swap platform (2); and
limiting portions, which are connected to a side of the placement portion (731) away from the quick swap platform (2) and are detachably connected to the base body (71).

13. The cleaning system according to claim 12, wherein the limiting portion comprises a pin shaft (732), the base body (71) is provided with a connecting hole (713), and the pin shaft (732) is extendable into the connecting hole (713), such that the pin shaft (732) radially limit the base body (71);
preferably,
at least two pin shafts (732) are provided, two pin shafts (732) form a positioning set, and the two pin shafts (732) in the positioning set are distributed along a diagonal of the placement portion (731).

14. The cleaning system according to claim 12, wherein the tool bracket (73) further comprises supporting portions (733), the supporting portions (733) are connected to the placement portion (731), the supporting portions (733) and the limiting portions are located on the same side of the placement portion (731), and the supporting portions (733) abut against the base body (71);
preferably,
the supporting portions (733) and the limiting portions are alternately distributed along an edge of the placement portion (731).

15. A battery production line comprising the cleaning system according to any one of claims 7 to 14, and a feeding mechanism, wherein the battery modules include the first-article battery module and battery modules other than the first-article battery module and are conveyed by the feeding mechanism to the quick swap platform.

## Patentansprüche

1. Reinigungsverfahren, das auf ein Reinigungssystem zum Reinigen von Batteriemodulen angewendet wird, wobei das Reinigungssystem eine Steuervorrichtung (1), eine Schnellwechselplattform (2), eine Klemmbackenvorrichtung (3) und eine Plasmareinigungsmaschine (4) umfasst, wobei die Klemmbackenvorrichtung (3) eine Seitenklemme (31) umfasst, wobei die Batteriemodule ein Erstmuster-Batteriemodul und ein von dem Erstmuster-Batteriemodul verschiedenes Batteriemodul umfassen, wobei das Verfahren **dadurch gekennzeichnet ist, dass** es die folgenden Schritte umfasst:
Bestimmen, durch die Steuervorrichtung (1), ob es ein Zielwerkzeug (7) auf der Schnellwechselplattform (2) gemäß Erstmuster-Zielinformationen gibt, wenn die Erstmuster-Zielinformationen empfangen werden, wobei die Erstmuster-Zielinformationen Entwurfsinformationen des Erstmuster-Batteriemoduls repräsentieren; wobei das Zielwerkzeug (7) ein Werkzeug ist, das dazu ausgelegt ist, anstelle des Erstmuster-Batteriemoduls gereinigt zu werden; wobei das Zielwerkzeug (7) eine Reinigungsplatte (72) umfasst; und wobei die Reinigungsplatte (72) aus dem gleichen Material wie das Erstmuster-Batteriemodul hergestellt ist; und
Steuern, durch die Steuervorrichtung (1), der Klemmbackenvorrichtung (3), um sich in eine Greifposition zu bewegen, die dem Zielwerkzeug (7) entspricht, wenn bestimmt wird, dass sich das Zielwerkzeug (7) auf der Schnellwechselplattform (2) befindet; Steuern, durch die Steuervorrichtung (1), der Seitenklemme (31), um das Zielwerkzeug (7) basierend auf der Greifposition zu ergreifen; Steuern, durch die Steuervorrichtung (1), der Klemmbackenvorrichtung (3), um sich in eine Reinigungsposition zu bewegen, wenn die Seitenklemme (31) das Zielwerkzeug (7) erfasst; und Steuern, durch die Steuervorrichtung (1), der Plasmareinigungsmaschine (4), um die Reinigungsplatte (72) in dem Zielwerkzeug (7) zu reinigen; Durchführen eines Reinigungsvorgangs an den Batteriemodulen durch das Reinigungssystem, wenn ein Reinigungswirkungstest am Zielwerkzeug (7) bestanden wird.

2. Reinigungsverfahren nach Anspruch 1, wobei die Schnellwechselplattform (2) einen Laser-Durchlichtsensor und eine Lese/Schreib-Vorrichtung umfasst; und Bestimmen, ob gemäß den Erstmuster-Zielinformationen ein Zielwerkzeug (7) auf der Schnellwechselplattform (2) vorhanden ist, Folgendes umfassend:
Detektieren, durch die Steuervorrichtung (1), ob es ein Werkzeug auf der Schnellwechselplattform (2) gibt, basierend auf dem Laser-Durchlichtsensor;
Lesen eines dem Werkzeug entsprechenden Hochfrequenz-Identifikationschips mittels der Lese/Schreib-Vorrichtung, wenn festgestellt wird, dass sich das Werkzeug auf der Schnellwechselplattform (2) befindet, um Identitätsinformationen des Werkzeugs zu erhalten; und Bestimmen, ob das Werkzeug das Zielwerkzeug (7) ist, gemäß den Identitätsinformationen des Werkzeugs und den Erstmuster-Zielinformationen.

3. Reinigungsverfahren nach Anspruch 2, wobei:
die Schnellwechselplattform (2) eine Werkzeughalterung (73) umfasst, das Werkzeug an der Werkzeughalterung (73) platziert wird und sich der Hochfrequenz-Identifikationschip auf einer Unterseite der Werkzeughalterung (73) befindet.

4. Reinigungsverfahren nach Anspruch 1, wobei die Schnellwechselplattform (2) einen Platzierungsabschnitt (211) umfasst und wobei, nach dem Steuern der Plasmareinigungsmaschine (4) zum Reinigen der Reinigungsplatte (72) in dem Zielwerkzeug (7), das Verfahren ferner Folgendes umfasst:
Steuern, durch die Steuereinrichtung (1), der Klemmbackeneinrichtung (3), um das Zielwerkzeug (7) am Platzierungsabschnitt (211) zu platzieren.

5. Reinigungsverfahren nach Anspruch 4, wobei die Schnellwechselplattform (2) einen Arbeitsabschnitt (212) umfasst und wobei nach Steuern, durch die Steuervorrichtung (1), der Klemmbackenvorrichtung (3), um das Zielwerkzeug (7) an dem Platzierungsabschnitt (211) zu platzieren, das Verfahren ferner Folgendes umfasst:
Steuern, durch die Steuervorrichtung (1), der Schnellwechselplattform (2), um das Zielwerkzeug (7) am Platzierungsabschnitt (211) zum Arbeitsabschnitt (212) zu ziehen.

6. Reinigungsverfahren nach Anspruch 1 oder 5, ferner umfassend:
Steuern, durch die Steuervorrichtung (1), der Schnellwechselplattform (2), um auszufahren, wenn eine Ausfahrbetriebsanweisung der Schnellwechselplattform (2) empfangen wird; oder
Steuern, durch die Steuervorrichtung (1), der Schnellwechselplattform (2), um sich zurückzubewegen, wenn eine Zurückbewegungsbetriebsanweisung der Schnellwechselplattform (2) empfangen wird.

7. Reinigungssystem zum Reinigen von Batteriemodulen, wobei das Reinigungssystem eine Schnellwechselplattform (2), eine Klemmbackenvorrichtung (3), eine Plasmareinigungsmaschine (4) und eine Steuervorrichtung (1) umfasst, wobei die Batteriemodule ein Erstmuster-Batteriemodul und ein vom Erstmuster-Batteriemodul verschiedenes Batteriemodul umfassen, wobei
die Schnellwechselplattform (2) und die Klemmbackenvorrichtung (3) mit der Steuervorrichtung (1) verbunden sind; wobei das Reinigungssystem **dadurch gekennzeichnet ist, dass**:
die Steuervorrichtung (1) dazu ausgelegt ist, die Klemmbackenvorrichtung (3) zu steuern, wenn bestimmt wird, dass sich ein Zielwerkzeug (7) auf der Schnellwechselplattform (2) befindet, basierend auf Erstmuster-Zielinformationen, um das Zielwerkzeug (7) zu ergreifen und zur Reinigung zu der Plasmareinigungsmaschine (4) zu bewegen, wobei die Erstmuster-Zielinformationen Entwurfsinformationen eines Erstmuster-Batteriemoduls repräsentieren; das Zielwerkzeug (7) ein Werkzeug ist, das dazu ausgelegt ist, anstelle des Erstmuster-Batteriemoduls gereinigt zu werden; das Zielwerkzeug (7) eine Reinigungsplatte (72) umfasst; die Reinigungsplatte (72) aus dem gleichen Material besteht wie das Erstmuster-Batteriemodul; und ein Reinigungsvorgang an den Batteriemodulen durch das Reinigungssystem durchgeführt wird, wenn der Reinigungswirkungstest an dem Zielwerkzeug (7) bestanden wird; und
die Schnellwechselplattform (2) dazu ausgelegt ist, das Zielwerkzeug (7) zu platzieren.

8. Reinigungssystem nach Anspruch 7, wobei die Klemmbackenvorrichtung (3) eine Seitenklemme (31) umfasst, wobei die Seitenklemme (31) mindestens zwei Klemmblöcke (311) umfasst, und
wobei die Seitenklemme (31) dazu ausgelegt ist, das Zielwerkzeug (7) zu ergreifen; vorzugsweise,
ferner einen Leistungsmechanismus (5) umfassend, der Folgendes umfasst:
eine Klemmbackenleistungsanordnung (51), die relativ zu der Schnellwechselplattform (2) fixiert ist und dazu ausgelegt ist, die Klemmbackenvorrichtung (3) anzutreiben, um sich zwischen der Schnellwechselplattform (2) und der Plasmareinigungsmaschine (4) zu bewegen; und
eine Seitenklemmenleistungsanordnung (52), die mit der Klemmbackenleistungsanordnung (51) verbunden ist und dazu ausgelegt ist, die mindestens zwei Klemmblöcke (311) anzutreiben, um sich zueinander hin oder voneinander weg zu bewegen.

9. Reinigungssystem nach Anspruch 7, ferner umfassend einen Schutzrahmen (6), wobei die Schnellwechselplattform (2) an einer Öffnung des Schutzrahmens (6) angeordnet ist und die Schnellwechselplattform (2) Folgendes umfasst:
eine Basis (21), die einen Platzierungsabschnitt (211), der außerhalb des Schutzrahmens (6) bereitgestellt ist, und einen Arbeitsabschnitt (212), der innerhalb des Schutzrahmens (6) bereitgestellt ist, umfasst;
ein Bewegungselement (22), das mit der Basis (21) verbunden ist, das ausgelegt ist zum Platzieren des Zielwerkzeugs (7) und zwischen dem Platzierungsabschnitt (211) und dem Arbeitsabschnitt (212) relativ zu der Basis (21) bewegbar ist; und
ein Plattformantriebselement (23), das mit der Basis (21) verbunden ist, das eine Ausgangswelle in Getriebeverbindung mit dem Bewegungselement (22) aufweist und ausgelegt ist zum Bewegen des Bewegungselements (22) relativ zur Basis (21).

10. Reinigungssystem nach einem der Ansprüche 7 bis 9, wobei das Zielwerkzeug (7) Folgendes umfasst:
einen Grundkörper (71), der dazu ausgelegt ist, von der Klemmbackenvorrichtung (3) ergriffen zu werden; und
die Reinigungsplatte (72), die mit einer Seite des Grundkörpers (71) verbunden ist.

11. Reinigungssystem nach Anspruch 10, wobei der Grundkörper (71) einen Trageabschnitt (711) und Klemmabschnitte (712) umfasst, die Reinigungsplatte (72) lösbar mit dem Trageabschnitt (711) verbunden ist, die Klemmabschnitte (712) dazu ausgelegt sind, von der Klemmbackenvorrichtung (3) ergriffen zu werden, und mindestens zwei Klemmabschnitte (712) bereitgestellt und gleichmäßig entlang einer Kante des Trageabschnitts (711) verteilt sind.

12. Reinigungssystem nach Anspruch 11, das ferner eine Werkzeughalterung (73) umfasst, die Folgendes umfasst:
einen Platzierungsabschnitt (731), der dazu ausgelegt ist, auf der Schnellwechselplattform (2) platziert zu werden; und
Begrenzungsabschnitte, die mit einer der Schnellwechselplattform (2) abgewandten Seite des Platzierungsabschnitts (731) verbunden und lösbar mit dem Grundkörper (71) verbunden sind.

13. Reinigungssystem nach Anspruch 12, wobei der Begrenzungsabschnitt eine Stiftwelle (732) umfasst, der Grundkörper (71) mit einem Verbindungsloch (713) versehen ist und die Stiftwelle (732) in das Verbindungsloch (713) verlängerbar ist, so dass die Stiftwelle (732) den Grundkörper (71) radial begrenzt;
vorzugsweise,
wobei mindestens zwei Stiftwellen (732) bereitgestellt sind, zwei Stiftwellen (732) einen Positioniersatz bilden und die beiden Stiftwellen (732) im Positioniersatz entlang einer Diagonalen des Platzierungsabschnitts (731) verteilt sind.

14. Reinigungssystem nach Anspruch 12, wobei die Werkzeughalterung (73) ferner Stützabschnitte (733) umfasst, die Stützabschnitte (733) mit dem Platzierungsabschnitt (731) verbunden sind, die Stützabschnitte (733) und die Begrenzungsabschnitte auf derselben Seite des Platzierungsabschnitts (731) angeordnet sind und die Stützabschnitte (733) an dem Grundkörper (71) anliegen;
vorzugsweise,
wobei die Stützabschnitte (733) und die Begrenzungsabschnitte abwechselnd entlang einer Kante des Platzierungsabschnitts (731) verteilt sind.

15. Batterieproduktionslinie, die das Reinigungssystem nach einem der Ansprüche 7 bis 14 und einen Zuführmechanismus umfasst, wobei die Batteriemodule das Erstmuster-Batteriemodul und von dem Erstmuster-Batteriemodul verschiedene Batteriemodule beinhalten und durch den Zuführmechanismus zu der Schnellwechselplattform befördert werden.

## Revendications

1. Procédé de nettoyage appliqué à un système de nettoyage pour nettoyer des modules de batterie, le système de nettoyage comprenant un dispositif de commande (1), une plate-forme d'échange rapide (2), un dispositif de mâchoire de serrage (3) et une machine de nettoyage au plasma (4), le dispositif de mâchoire de serrage (3) comprenant une pince latérale (31), les modules de batterie comprenant un module de batterie de premier article et un module de batterie autre que le module de batterie de premier article, le procédé étant **caractérisé en ce qu'**il comprend les étapes suivantes :
le fait de déterminer, par le dispositif de commande (1), s'il y a un outil cible (7) sur la plate-forme d'échange rapide (2) en fonction d'informations de premier article cible lors de la réception des informations de premier article cible, dans lequel les informations de premier article cible représentent des informations de plan du module de batterie de premier article ; l'outil cible (7) est un outil configuré pour être nettoyé à la place du module de batterie de premier article ; l'outil cible (7) comprenant une plaque de nettoyage (72) ; et la plaque de nettoyage (72) est constituée du même matériau que le module de batterie de premier article ; et
la commande, par le dispositif de commande (1), du dispositif de mâchoire de serrage (3) pour qu'il se déplace jusqu'à une position de préhension correspondant à l'outil cible (7) lorsqu'il est déterminé que l'outil cible (7) se trouve sur la plate-forme d'échange rapide (2) ; la commande, par le dispositif de commande (1), de la pince latérale (31) pour saisir l'outil cible (7) sur la base de la position de préhension ; la commande, par le dispositif de commande (1), du dispositif de mâchoire de serrage (3) pour qu'il se déplace jusqu'à une position de nettoyage lorsque la pince latérale (31) saisit l'outil cible (7) ; et la commande, par le dispositif de commande (1), de la machine de nettoyage au plasma (4) pour nettoyer la plaque de nettoyage (72) dans l'outil cible (7) ;
la réalisation, par le système de nettoyage, d'une opération de nettoyage sur les modules de batterie lorsqu'un test d'effet de nettoyage sur l'outil cible (7) est réussi.

2. Procédé de nettoyage selon la revendication1, dans lequel la plate-forme d'échange rapide (2) comprend un capteur laser à faisceau traversant et un lecteur-graveur ; et le fait de déterminer s'il y a un outil cible (7) sur la plate-forme d'échange rapide (2) en fonction d'informations de premier article cible comprend :
le fait de détecter, par le dispositif de commande (1), s'il y a un outil sur la plate-forme d'échange rapide (2) sur la base du capteur laser à faisceau traversant ;
la lecture d'une puce d'identification par radiofréquence correspondant à l'outil au moyen du lecteur-graveur lorsqu'il est déterminé que l'outil se trouve sur la plate-forme d'échange rapide (2), de manière à obtenir des informations d'identité de l'outil ; et
le fait de déterminer si l'outil est l'outil cible (7) en fonction des informations d'identité de l'outil et des informations de premier article cible.

3. Procédé de nettoyage selon la revendication 2, dans lequel
la plate-forme d'échange rapide (2) comprend un support d'outil (73), l'outil est placé sur le support d'outil (73), et la puce d'identification par radiofréquence est située au niveau d'un fond du support d'outil (73).

4. Procédé de nettoyage selon la revendication 1, dans lequel la plate-forme d'échange rapide (2) comprend une section de placement (211), et après la commande de la machine de nettoyage au plasma (4) pour nettoyer la plaque de nettoyage (72) dans l'outil cible (7), le procédé comprend en outre :
la commande, par le dispositif de commande (1), du dispositif de mâchoire de serrage (3) pour placer l'outil cible (7) au niveau de la section de placement (211).

5. Procédé de nettoyage selon la revendication 4, dans lequel la plate-forme d'échange rapide (2) comprend une section de travail (212), et après la commande, par le dispositif de commande (1), du dispositif de mâchoire de serrage (3) pour placer l'outil cible (7) au niveau de la section de placement (211), le procédé comprend en outre :
la commande, par le dispositif de commande (1), de la plate-forme d'échange rapide (2) pour tirer l'outil cible (7) au niveau de la section de placement (211) vers la section de travail (212).

6. Procédé de nettoyage selon la revendication 1 ou 5, comprenant en outre :
la commande, par le dispositif de commande (1), de la plate-forme d'échange rapide (2) pour qu'elle se déplace vers l'extérieur lors de la réception d'une instruction d'opération de déplacement vers l'extérieur de la plate-forme d'échange rapide (2) ; ou
la commande, par le dispositif de commande (1), de la plate-forme d'échange rapide (2) pour qu'elle se déplace vers l'arrière lors de la réception d'une instruction d'opération de déplacement vers l'arrière de la plate-forme d'échange rapide (2).

7. Système de nettoyage pour nettoyer des modules de batterie, le système de nettoyage comprenant une plate-forme d'échange rapide (2), un dispositif de mâchoire de serrage (3), une machine de nettoyage au plasma (4), et un dispositif de commande (1), les modules de batterie comprenant un module de batterie de premier article et un module de batterie autre que le module de batterie de premier article, dans lequel
la plate-forme d'échange rapide (2) et le dispositif de mâchoire de serrage (3) sont reliés au dispositif de commande (1) ; le système de nettoyage étant **caractérisé en ce que** :
le dispositif de commande (1) est configuré pour commander, lorsqu'il est déterminé qu'il y a un outil cible (7) sur la plate-forme d'échange rapide (2) sur la base d'informations de premier article cible, le dispositif de mâchoire de serrage (3) pour qu'il saisisse et déplace l'outil cible (7) vers la machine de nettoyage au plasma (4) pour le nettoyage, dans lequel les informations de premier article cible représentent des informations de plan d'un module de batterie de premier article ;
l'outil cible (7) est un outil configuré pour être nettoyé à la place du module de batterie de premier article ; l'outil cible (7) comprend une plaque de nettoyage (72) ; la plaque de nettoyage (72) est constituée du même matériau que le module de batterie de premier article ; et une opération de nettoyage sur les modules de batterie par le système de nettoyage est effectuée lorsque le test d'effet de nettoyage sur l'outil cible (7) est réussi ; et
la plate-forme d'échange rapide (2) est configurée pour placer l'outil cible (7).

8. Système de nettoyage selon la revendication 7, dans lequel le dispositif de mâchoire de serrage (3) comprend une pince latérale (31), la pince latérale (31) comprenant au moins deux blocs de serrage (311), et
la pince latérale (31) étant configurée pour saisir l'outil cible (7) ;
de préférence,
comprenant en outre un mécanisme d'alimentation (5), qui comprend :
un ensemble d'alimentation de mâchoire de serrage (51), qui est fixe par rapport à la plate-forme d'échange rapide (2) et est configuré pour entraîner le dispositif de mâchoire de serrage (3) pour qu'il se déplace entre la plate-forme d'échange rapide (2) et la machine de nettoyage au plasma (4) ; et
un ensemble d'alimentation de pince latérale (52), qui est relié à l'ensemble d'alimentation de mâchoire de serrage (51) et est configuré pour entraîner les au moins deux blocs de serrage (311) pour qu'ils se rapprochent ou s'éloignent l'un de l'autre.

9. Système de nettoyage selon la revendication 7, comprenant en outre un cadre de protection (6), dans lequel la plate-forme d'échange rapide (2) est agencée au niveau d'une ouverture du cadre de protection (6), et la plate-forme d'échange rapide (2) comprend :
une base (21), qui comprend une section de placement (211) fournie à l'extérieur du cadre de protection (6) et une section de travail (212) fournie à l'intérieur du cadre de protection (6) ;
un élément mobile (22), qui est relié à la base (21), est configuré pour placer l'outil cible (7), et est mobile entre la section de placement (211) et la section de travail (212) par rapport à la base (21) ; et
un élément d'entraînement de plate-forme (23), qui est relié à la base (21), a un arbre de sortie en liaison de transmission avec l'élément mobile (22), et est configuré pour entraîner l'élément mobile (22) pour qu'il se déplace par rapport à la base (21).

10. Système de nettoyage selon l'une quelconque des revendications 7 à 9, dans lequel l'outil cible (7) comprend :
un corps de base (71) configuré pour être saisi par le dispositif de mâchoire de serrage (3) ; et
la plaque de nettoyage (72) reliée à un côté du corps de base (71).

11. Système de nettoyage selon la revendication 10, dans lequel le corps de base (71) comprend une partie de portage (711) et des parties de serrage (712), la plaque de nettoyage (72) est reliée de manière amovible à la partie de portage (711), les parties de serrage (712) sont configurées pour être saisies par le dispositif de mâchoire de serrage (3), et au moins deux parties de serrage (712) sont fournies et sont réparties uniformément le long d'un bord de la partie de portage (711).

12. Système de nettoyage selon la revendication 11, comprenant en outre un support d'outil (73), qui comprend :
une partie de placement (731) configurée pour être placée sur la plate-forme d'échange rapide (2) ; et
des parties de limitation, qui sont reliées à un côté de la partie de placement (731) à l'écart de la plate-forme d'échange rapide (2) et sont reliées de manière amovible au corps de base (71).

13. Système de nettoyage selon la revendication 12, dans lequel la partie de limitation comprend un arbre broche (732), le corps de base (71) est pourvu d'un trou de liaison (713), et l'arbre broche (732) peut s'étendre dans le trou de liaison (713), de telle sorte que l'arbre broche (732) limite radialement le corps de base (71) ;
de préférence,
au moins deux arbres broches (732) sont fournis, deux arbres broches (732) forment un ensemble de positionnement, et les deux arbres broches (732) de l'ensemble de positionnement sont répartis le long d'une diagonale de la partie de placement (731).

14. Système de nettoyage selon la revendication 12, dans lequel le support d'outil (73) comprend en outre des parties de support (733), les parties de support (733) sont reliées à la partie de placement (731), les parties de support (733) et les parties de limitation sont situées sur le même côté de la partie de placement (731), et les parties de support (733) viennent en butée contre le corps de base (71) ;
de préférence,
les parties de support (733) et les parties de limitation sont réparties alternativement le long d'un bord de la partie de placement (731).

15. Ligne de production de batteries comprenant le système de nettoyage selon l'une quelconque des revendications 7 à 14, et un mécanisme d'alimentation, dans laquelle les modules de batterie incluent le module de batterie de premier article et des modules de batterie autres que le module de batterie de premier article et sont transportés par le mécanisme d'alimentation vers la plate-forme d'échange rapide.
